**Europäisches Patentamt**

**European Patent Office**

**Office européen des brevets**

(19)

(11) **EP 1 283 618 A2**

(12) # EUROPÄISCHE PATENTANMELDUNG

(43) Veröffentlichungstag:
**12.02.2003 Patentblatt 2003/07**

(51) Int Cl.⁷: **H04L 12/18**, H04L 29/06

(21) Anmeldenummer: **02102011.0**

(22) Anmeldetag: **09.07.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **07.08.2001 DE 10138718**

(71) Anmelder: **SIEMENS AKTIENGESELLSCHAFT 80333 München (DE)**

(72) Erfinder:
- **Beckmann, Mark**
  **38102, Braunschweig (DE)**
- **Eckert, Michael**
  **38122, Braunschweig (DE)**
- **Hans, Martin**
  **31139, Hildesheim (DE)**
- **Otte, Andreas**
  **29227, Celle (DE)**

(54) **Verfahren zur Übermittlung von Chiffrierungsinformationen an Teilnehmer einer Multicast-Gruppe**

(57)    Vorgesehen ist ein Verfahren zur Übermittlung von Chiffrierungsinformationen an Teilnehmer einer Multicast- Gruppe in einem Mobilfunknetzwerk, welches sich dadurch auszeichnet, dass die Übertragung eines Chiffrierungsschlüssels und einer aktuellen Chiffrierungssequenznummer bzw. Teile einer solchen Sequenznummer über eine Luftschnittstelle, über eine bereits gegenüber dem Abhören durch unautorisierte Personen geschützte Verbindungen, welche den Empfänger der Chiffrierungsinformationen dediziert zugeordnet sind.

EP 1 283 618 A2

**Beschreibung**

Die vorliegende Erfindung bezieht sich auf ein Verfahren zur Übermittlung von Chiffrierungsinformationen an Teilnehmer einer Multicast-Gruppe, wie durch den Oberbegriff des unabhängigen Patentanspruches 1 beschrieben.

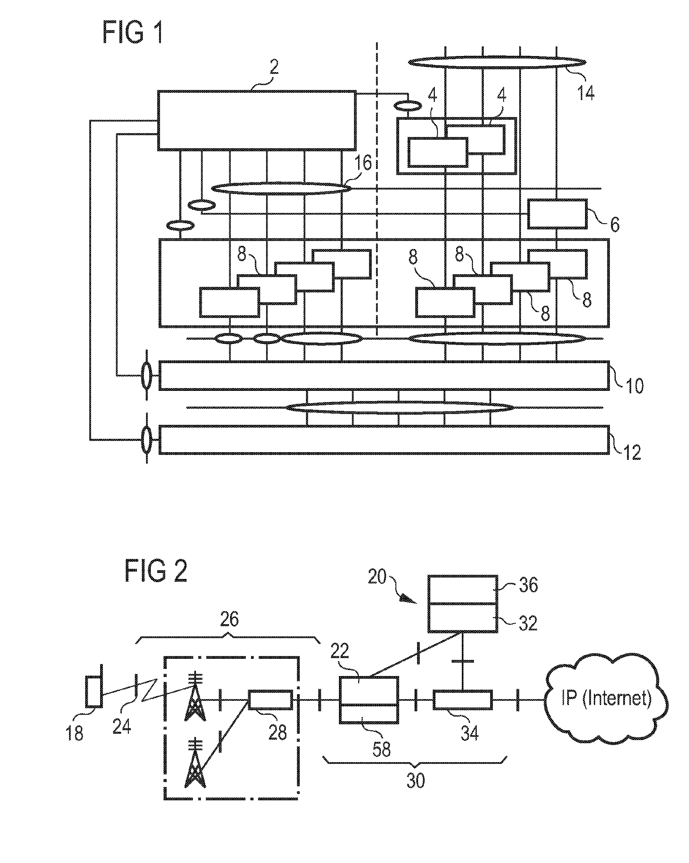

Zum besseren Verständnis der vorliegenden Erfindung sowie des zugrunde liegenden Problems sei zunächst in schematischer Art und Weise die Anatomie eines UMTS-Netwerkes (Universal Mobile Telecommunication Network) unter Verweis auf die Figuren 1 bis 7 beschrieben.

Fig. 1 zeigt die UMTS Protokoll Architektur der zweiten Schicht und der unteren dritten Schicht, die die Protokolle der UMTS Luftschnittstelle beinhalten. Diese Architektur liegt sowohl im mobilen Endgerät (User Equipment, UE) als auch in einem Knoten des Mobilkommunikations-Netzes (Radio Network Controller, RNC) vor. Das heißt, dass jedes der Protokolle einmal im UE und einmal im RNC existiert. Der Bereich links der gestrichelten Linie betrifft dabei das C-Plane Signalling und der Bereich rechts davon die U-Plane Information.

Jede der in Abbildung 1 dargestellten Protokoll-Schichten bietet der über ihr liegenden Schicht ihre Dienste an so genannten Dienstzugangspunkten an. Diese Dienstzugangspunkte werden zum besseren Verständnis der Architektur mit allgemein gebräuchlichen und eindeutigen Namen versehen, wie z.B. Logische Kanäle, Transportkanäle, Radio Bearer; Signalling Radio Bearer. Die in Abbildung 1 dargestellten Protokoll-Schichten sind:

- die Radio Resource Control-(RRC) oder untere dritte Schicht 2
- die Packet Data Convergence Protokoll- (PDCP) oder obere zweite Schicht 4
- die Broadcast/Multicast Control- (BMC) oder obere zweite Schicht 6
- die Radio Link Control- (RLC) oder mittlere zweite Schicht 8
- die Medium Access Control- (MAC) oder untere zweite Schicht 10
- und die physikalische Schicht (PHY) 12

Generell können im UMTS-Mobilfunkendgerät (UE) Daten von verschiedenen Applikationen erzeugt werden. Für Sprachverbindungen erzeugt beispielsweise ein Sprach-Coder einen oder mehrere Sprach-Datenströme oder ein HTML-Browser erzeugt unregelmäßige Paket-Datenströme. Diese Daten werden zunächst eventuell von Protokollen höherer Schichten modifiziert und für den Datentransfer in verschiedenen Netzen vorbereitet, bspw. TCP und IP. Für den Transport über die UMTS Luftschnittstelle müssen diese Daten in den verschiedenen Protokollen der zweiten Schicht PDCP 4, BMC 6, RLC 8 und MAC 10 optimiert werden. Der Dienstzugangspunkt, an dem nicht-UMTS-spezifische Protokolle den Übertragungsdienst der UMTS-Luftschnittstelle nutzen können wird als Radio Bearer (RB) 14 bezeichnet. RB's 14 werden also oberhalb der zweiten Schicht je nach genutzten Protokollen oberhalb von PDCP 4, BMC 6 oder RLC 8 angeboten und übertragen Daten transparent vom UE über die UMTS-Luftschnittstelle zum RNC und umgekehrt. Der Dienstzugangspunkt, an dem das UMTS-spezifische RRC Protokoll den Übertragungsdienst der UMTS-Luftschnittstelle nutzt, wird dabei als Signalling Radio Bearer (SRB) 16 bezeichnet.

RB's 14 und SRB's 16 können dabei sowohl bidirektional als auch unidirektional sein. Sie können also Daten entweder in zwei Richtungen (im Uplink, UL und im Downlink, DL) oder nur in einer Richtung (UL oder DL) übertragen.

Bei der Übertragung von Informationen bzw. Daten über die UMTS- Luftschnittstelle tritt jedoch ein Sicherheitsproblem auf, da im allgemeinen Daten, die über eine Luftschnittstelle übertragen werden, potentiell von unautorisierten Personen ab- bzw. mitgehört werden können. Daher werden die Daten, die über die RB's 14 zur zweiten Schicht 4, 6, 8, 10 der UMTS Protokollarchitektur gelangen, vor dem Abhören durch unautorisierte Personen geschützt, in dem sie vor dem Senden über die Luftschnittstelle chiffriert werden. Dabei wird zur Chiffrierung ein Chiffrierungsschlüssel angewendet, der für jeden Mobilfunkteilnehmer spezifisch ist, und bei jedem Verbindungsaufbau individuell zwischen dem Netzwerk und dem UE ausgehandelt wird aber auch während einer bestehenden Verbindung neu ausgehandelt werden kann. Diese individuelle Aushandlung eines Chiffrierungsschlüssels für jeden einzelnen Mobilfunkteilnehmer ist jedoch nur für solche Daten sinnvoll, die nur für einen einzigen Nutzer bestimmt sind.

Betrachtet man allerdings den Fall, dass Daten nicht nur zu einem Mobilfunkteilnehmer, sondern zu mehreren gleichzeitig gesendet werden können, wie dies im Multicast bei Teilnehmern einer Multicast-Gruppe üblich ist, gibt es zunächst einmal zwei Möglichkeiten dies zu tun.

Zum einen kann man die Daten einfach Kopieren und über separate Kanäle zu den entsprechenden Mobilfunkteilnehmern senden. In diesem Fall kann zwar zum Schutz gegen unerlaubtes Abhören der Daten der für jeden Mobilfunkteilnehmer individuell ausgehandelte Chiffrierungsschlüssel angewendet werden, jedoch verschwendet dieses Verfahren im gewissen Maße Übertragungskapazität, da für jeden Teilnehmer einer Multicast-Gruppe ein gesonderter Kanal vorhanden sein muss.

Daher ist es sinnvoller, die Daten nicht zu vervielfältigen und über separate Kanale zu senden, sonder sie über einen einzigen Kanal über die Luftschnittstelle zu transportieren, den alle Teilnehmer der Multicast-Gruppe gemeinsam empfangen. In diesem Fall kann zur Chiffrierung der Daten allerdings keiner der individuell ausgehandelten Chiffrierungsschlüssel der Teilnehmer der Multicast-Gruppe benutzt werden, weil jeder Chiffrierungsschlüssel sinnvoller Weise nur dem betreffenden UE bekannt ist, und somit die restlichen Teilnehmer die empfangenen Daten nicht entschlüsseln könnten.

Zur Erzeugung und Aushandlung eines individuellen Chiffrierungsschlüssels ist die folgende Vorgehensweise bekannt. Der Chiffrierungsschlüssel wird während einer so genannten Authentifizierungsprozedur, die zumindest zu Beginn eines jeden Verbindungsaufbaus durchlaufen wird, darüber hinaus aber auch vom Netzwerkoperator initiiert während einer Verbindung gestartet werden kann, erzeugt und zwischen dem UE und dem Netzwerk ausgehandelt. Der Prozedur liegt eine Netzwerkarchitektur nach Fig. 2 zu Grunde, wobei an der Prozedur hauptsächlich das Home Enviroment (HE) 20, der Serving GPRS Support Node (SGSN) 22 und das UE 18 beteiligt sind. Bei der Authentifizierungsprozedur wird vorausgesetzt, dass die Übertragung von Informationen über Schnittstellen jenseits der Uu-Schnittstelle 24 sicher ist, d.h. in keiner Form durch unautorisierte Personen abgehört werden kann. Des weiteren sei hier erwähnt, dass die Authentifizierungsprozedur im allgemeinen nicht nur zur Erzeugung und Aushandlung eines Chiffrierungsschlüssels dient, sonder auch zur gegenseitigen Autorisierung von UE und Netzwerk, um Daten untereinander austauschen zu dürfen, sowie zur Erzeugung und Aushandlung eines Integritätsschlüssels, durch dessen Anwendung dem Empfänger die Lauterkeit der empfangenen Daten bestätigt wird. Auf den Integritätsschlüssel wird im folgenden jedoch nicht weiter eingegangen, weil eine Integritätsschutz im UMTS nur auf Signalisierungsdaten und nicht auf Nutzdaten angewendet wird.

Nach dem Einschalten eines UE 18 stellt dieses als erstes eine Verbindung zum Universal Terristrial Radio Access Network (UTRAN) 26 her, indem eine Signalisierungsverbindung zwischen den RRC Protokollschichten 2 im RNC 28 und UE 18 eingerichtet wird. Zum Aufbau einer solchen Signalisierungsverbindung wird dem RRC 2 im RNC 28 unter anderem die Identitätsnummer (z.B. IMSI) des Mobilfunkteilnehmers, die Fähigkeit des UE's 18, bestimmte Sicherheitsprozeduren zu unterstützen, und die Startwerte von bestimmten Hyper Frame Numbers (HFNs), die für die eigentliche Chiffrierungsprozedur von Bedeutung sind, vom UE 18 mitgeteilt. Ist zwischen UE 18 und UTRAN 26 eine Signalisierungsverbindung vorhanden, meldet sich das UE 18 im nächsten Schritt beim Core Network (CN) 30 an, indem es eine weitere Signalisierungsverbindung zum SGSN 22 aufbaut. Für diesen Verbindungsaufbau wird dem SGSN 22 unter anderem ebenfalls die Identifikationsnummer des Mobilfunkteilnehmers mitgeteilt. Anhand dieser Identitätsnummer wird der Mobilfunkteilnehmer im Netzwerk identifiziert, wodurch alle teilnehmerspezifischen Daten und Informationen, die in einer Liste im Home Location Register (HLR) 32 gespeichert sind, den Netzwerkeinheiten, wie z.B. RNC 28, SGSN 22, GGSN 34 usw., bei Bedarf bekannt gemacht werden können. Eine im HLR 32 gespeicherte teilnehmerspezifische Information ist dabei z.B. ein spezieller Sicherheitskode (K), der auch auf dem Universal Subscriber Identity Module (USIM) im UE 18 gespeichert ist, und zur Generierung des Chiffrierungsschlüssels benötigt wird.

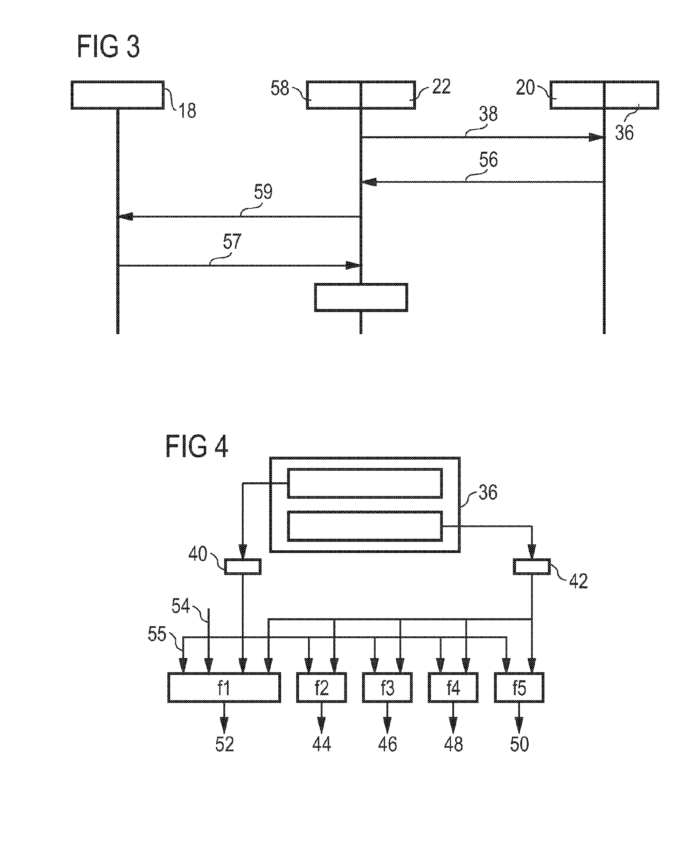

Nach dem Aufbau einer Signalisierungsverbindung zwischen UE 18 und CN 30 wird die Authentifizierungsprozedur, deren Signalisierungsverlauf in Fig. 3 dargestellt ist, gestartet, indem der SGSN 22 eine Anfrage nach Authentifizierungsdaten (authentication data request) 38 an das HE 20 sendet. In dieser Anfrage ist die Identitätsnummer des Mobilfunkteilnehmers enthalten für den eine Authentifizierungsprozedur durchgeführt werden soll. Im HE 20 bzw. im Authentication Center (AuC) 36, das genauso wie das HLR 32 im HE 20 enthalten ist, werden nach dem Empfang der Anfrage 38 eine bestimmte Anzahl von Datensätzen (Authentication Vectors, AVs) erzeugt, die zur Generierung des Chiffrierungsschlüssels benötigt werden.

Dabei wird pro Authentifizierungsprozedur ein einzelner Datensatz bzw. AV genutzt. Wie die einzelnen Parameter eines Authentication Vectors erzeugt werden, ist in Fig. 4 dargestellt.

Als erstes generiert das AuC 36 eine neue Sequenznummer (Sequence Number of the HE, SQNhe 40), d. h. eine Sequenznummer die noch nicht aufgetreten ist, und eine nicht nachvollziehbare Zufallszahl RAND 42. Dabei hält das HE 20 für jeden Teilnehmer eine spezifische SQNhe 40 vor und aktualisiert diese bei Bedarf. Daraufhin berechnet das AuC 36 die benötigten Parameter für den AV, wobei die einzelnen Parameter mit Hilfe von speziellen Funktionen berechnet werden, die in Fig. 4 mit f1 bis f5 bezeichnet sind. Zur Berechnung der Parameter XRES, CK, 1K und AK werden nur die Zufallszahl RAND und der teilnehmerspezifische Sicherheitskode K 55 benötigt, den das AuC 36 anhand der Identitätsnummer des Teilnehmers vom HLR 32 mitgeteilt bekommt. Dabei ist XRES (expected response) 44 ein Referenzwert, der vom Netzwerk als Antwort des UE 18 auf die Authentifizierungsprozedur erwartet wird, CK (cipher key) 46 der Chiffrierungsschlüssel, IK (integrity key) 48 der zuvor schon erwähnte Integritätsschlüssel und AK (anonymity key) 50 ein Anonymitätsschlüssel. Zur Berechnung des Message Authentication Codes (MAC) 52, mit dem während der Authentifizierungsprozedur die Berechtigung von UE 18 und Netzwerk geprüft wird, werden zusätzlich noch die vom AuC 36 erzeugte Sequenznummer SQNhe und ein Authentication Management field (AMF) 54 benötigt. Das AMF 54 kann dabei unterschiedliche Funktionen erfüllen. Nachdem die fünf Parameter (MAC 52, XRES 44, CK 46, IK 48, AK 50) berechnet wurden, erzeugt das AuC 36 noch einen Authentication Token (AUTN), der sich aus einer Aneinanderreihung der mit dem AK 50 verschlüsselten SQNhe, des AMF 54 und des MAC 52 zusammensetzt. Die Sequenznummer SQNhe wird dabei mit dem AK 50 verschlüsselt, weil man unter Umständen aus ihr die Identitätsnummer und den Aufenthaltsort des Teilnehmers ableiten könnte. Aus den erzeugten Parametern wird anschließend der AV gebildet, in dem die einzelnen Parameter in der nachstehenden Reihenfolge aneinander gehängt werden

$$AV := RAND\|XRES\|CK\|IK\|AUTN$$

mit

$$AUTN := SQNhe \oplus AK\|AMF\|MAC$$

wobei das Zeichen "|" die Verkettung der einzelnen Parameter und "⊕" eine logische XOR Verknüpfung symbolisiert. Mehrerer solcher AV's, die nach ihren zur Berechnung benutzten Sequenznummern SQNhe sortiert sind, werden dann als Antwort auf die Anfrage (authentication data response) 56 vom HE 20 an den SGSN 22 zurück gesendet, der sie in seinem Visitor Location Register (VLR) 56 speichert.

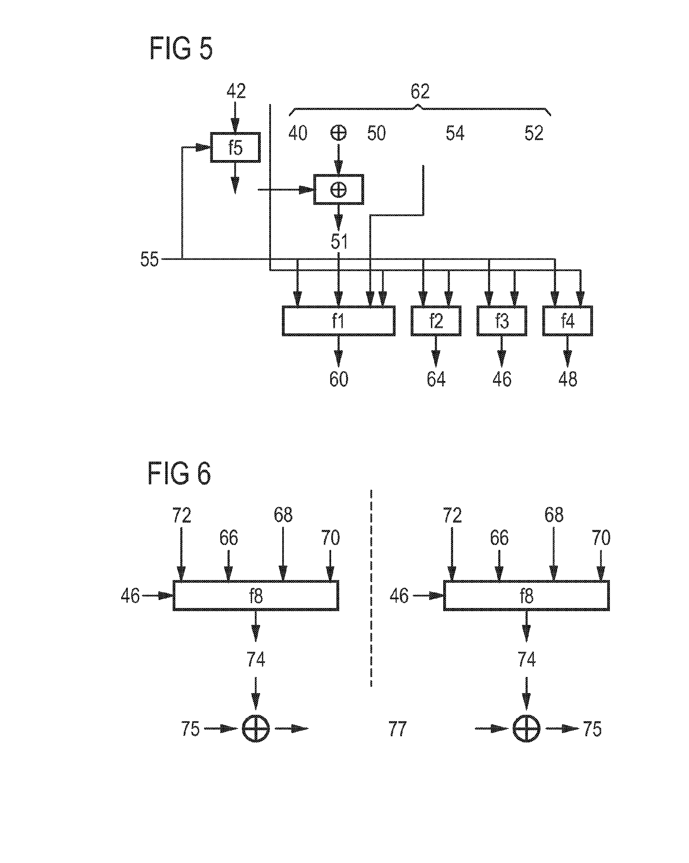

Sind im VLR 58 des SGSN 22 AV's gespeichert, wählt der SGSN 22 den AV aus, der mit der niedrigsten SQNhe generiert wurde und sendet eine Anfrage zur Teilnehmer Authentifizierung (u-ser authentication request) 59 an das UE 18, das die Parameter RAND 42 und AUTN 62 des ausgewählten AV enthält. Das UE 18 beginnt nach dem Empfang der Anfrage damit mit Hilfe der enthaltenden Parameter einen XMAC (Expected Message Authentication Code) 60 zu berechnen, wie unter anderem in Fig. 5 dargestellt. Diese und auch die folgenden Berechnungen finden dabei im Universal Subscriber Indentity Module (USIM) des UE 18 statt. Als erstes berechnet das USIM aus der in der Anfrage enthaltenden Zufallszahl RAND 42 und dem im USIM gespeicherten Sicherheitskode K 55 den Anonymitätsschlüssel AK 50, um mit dessen Hilfe die im AUTN 62 enthaltene SQNhe zu entschlüsseln. Anschließend wird der XMAC 60 aus der zuvor berechneten SQNhe, dem Sicherheitskode K, der Zufallszahl RAND 42 und dem ebenfalls im AUTN 62 enthaltenen AMF 54 generiert. Dieser wird dann mit dem im AUTN 62 empfangenen und vom Netzwerk (HE 20/AuC 36) berechneten MAC 52 verglichen. Sind XMAC 60 und MAC 52 identisch, so haben sich das UE 18 und das Netzwerk gegenseitig dazu berechtigt, weiterhin Daten miteinander auszutauschen. Sind XMAC 60 und MAC 52 nicht identisch, tritt ein Authentifizierungsfehler auf. Nach dem das UE 18 nun berechtigt ist mit dem Netzwerk Daten auszutauschen, prüft das UE 18 ob es mit dem Netzwerk bezüglich der Sequenznummer synchron arbeitet, indem es seine eigene Sequenznummer SQNms (sequence number of the mobile station) mit der des Netzwerks (SQNhe) vergleicht. Liegt SQNhe dabei in einem tolerierten Bereich um SQNms, so berechnet das USIM als letztes die Antwort auf die Anfrage zur Teilnehmer Authentifizierung, den Wert RES (response) 64, sowie die für den weiteren Aufbau der Verbindung benötigten Schlüssel CK 46 und IK 48. Liegen SQNms und SQNhe zu weit auseinander, tritt wieder ein Authentifizierungsfehler ein.

Wenn die zuvor beschriebenen Berechnungen im USIM erfolgreich durchgeführt wurden sendet das UE 18 als Antwort auf die Anfrage (user authentication response) 57 den Parameter RES 64 zum SGSN 22, der diesen mit dem im entsprechenden AV enthaltenen XRES 44 Parameter vergleicht. Sind die beiden Parameter identisch, ist somit die Authentifizierungsprozedur abgeschlossen und der SGSN 22 sowie das UE 18 etablieren die beiden ausgehandelten Schlüssel CK 46 und IK 48. Auf der Netzwerkseite bedeutet dies, dass die Schlüssel CK 46 und IK 48, die im AV enthalten sind, vom SGSN 22 zum RNC 28 transportiert werden, wo die eigentlichen Chiffrierungs- und Integritätsalgorithmen ausgeführt werden. Unterscheiden sich die beiden Parameter voneinander, tritt wiederum ein Authentifizierungsfehler ein, auf den entsprechend reagiert wird. Generell kann nach jedem Authentifizierungsfehler der SGSN 22 entscheiden, ob er eine neue Authentifizierungsprozedur mit einem neuen AV aus dem VLR 58 startet, oder ob er den Fehler an das HE 20 berichtet.

Nachdem der Chiffrierungsschlüssel CK 46 nun ausgehandelt und vom SGSN 22 zum RNC 28 transportiert wurde, kann der RNC 28 diesen ab sofort benutzten, wodurch jegliche weitere Kommunikation zwischen Netzwerk und UE 18 unter abhörsicheren Bedingungen durchgeführt werden kann.

Die eigentliche Chiffrierungs- bzw. Dechiffrierungsprozedur ist mit allen Parametern in Fig. 6 dargestellt. Sie kann dabei abhängig von den vorgenommenen Konfigurationen der einzelnen Protokolleinheiten der zweiten Schicht entweder im RLC (Radio Link Control) 8 oder im MAC (Medium Access Control) 10 durchgeführt werden. Wird dabei die Chiffrierung der Nutzdaten z.B. im RLC 8 durchgeführt, findet die Dechiffrierung auf der Empfängerseite dementsprechend auch im RLC 8 statt.

Kern der Chiffrierungsprozedur ist der in Fig. 6 angedeutet Chiffrierungsalgorithmus f8, auf den im weiteren nicht weiter eingegangen wird. Die Eingangsparameter für diesen Algorithmus sind neben dem während der Authentifizierungsprozedur ausgehandelten Chiffrierungsschlüssel CK 46, noch die Parameter BEARER 66, DIRECTION 68, LENGTH 70 und COUNT-C 72. BEARER 66 stellt dabei die Identität des RB 14 da, über den die zu verschlüsselnden Nutzdaten zur zweiten Schicht gelangen und DIRECTION 68 die Richtung in der die Daten übertragen werden (UL oder DL). Der Parameter LENGTH 70 hingegen gibt ausschließlich die Länge des vom Algorithmus f8 erzeugten Chiffrierungskodes (KEYSTREAM BLOCK) 74 an und der COUNT-C Wert 72 ist ein zeitabhängiger Parameter, der später noch genauer beschrieben wird.

Basierend auf diesen Eingangsparametern generiert der Algorithmus f8 den KEYSTREAM BLOCK 74, der die gleiche Länge wie der Datenblock hat, der verschlüsselt und innerhalb eines Übertragungsintervalls zum Empfänger gesendet werden soll. Dabei gewährleistet das Verhalten der Eingangsparameter, dass für jeden neu zu verschlüsselnden Datenblock stets ein neuer Chiffrierungscode generiert wird. D.h. jeder Datenblock wird mit einem spezifischen Chiffrierungscode verschlüsselt. Somit ist es unautorisierten Personen nicht möglich durch den Empfang von mehreren aufeinander folgenden verschlüsselten Datenblöcken auf den Chiffrierungsschlüssel CK 42 zu schließen, wobei sich dieser zusätzlich, wie Anfangs schon beschrieben, von Zeit zu Zeit ändert, wenn, durch den Netzwerkoperator initiiert, eine neue Authentifizierungsprozedur gestartet wird. Die Bezugszeichen 75 bezeichnen einen Plaintext Block und 77 einen Ciphertext Block.

Die eigentliche Verschlüsselung des Datenblocks bestehet dann nur noch in einer einfachen, logischen XOR Verknüpfung der Datenbits mit den Bits des Chiffrierungskodes. Somit ist die Verschlüsselung eines Datenblocks vollzogen und er kann zur weiteren Verarbeitung an die nächste Protokolleinheit bzw. Protokollschicht übergeben werden. Im Empfänger wird für jeden verschlüsselten Datenblock der zugehörige Chiffrierungscode auf die gleiche Weise wie im Sender berechnet, wobei gewährleistet ist, das die Eingangsparameter des Chiffrierungsalgorithmus identisch sind. Die Entschlüsselung wird dann wiederum durch eine einfache logische XOR Verknüpfung erreicht.

Der oben erwähnte COUNT-C 72 Parameter ist dabei ein zeitabhängiger Parameter, der die Funktion einer Chiffrierungssequenznummer hat, da er nach jeder Verschlüsselung eines Datenblocks um eins erhöht wird. Für jeden RB 14, dessen RLC-Einheit 8 für den Unacknowledge Mode (UM) 76 oder den Acknowledge Mode (AM) 78 konfiguriert wurde, ist für jede Übertragungsrichtung (UL oder DL) ein separater COUNT-C 72 Wert eingerichtet. Somit sind z.B. für einen bidirektionalen RB 14 zwei COUNT-C Werte 72 vorhanden. Für alle RB's 14, deren RLC-Einheiten 8 für den Transparent Mode (TrM) 80 konfiguriert wurden, gibt es hingegen insgesamt nur zwei COUNT-C Werte 72, wobei jeweils einer für jede Übertragungsrichtung (UL und DL) vorgesehen ist. An dieser Stelle ist anzumerken, dass in solch einem Fall, wo die RLC-Einheit 8 eines RB 14 im TrM 80 arbeitet, die Chiffrierung der Nutzdaten im MAC 10 der zweiten Schicht der UMTS-Protokollarchitektur statt findet.

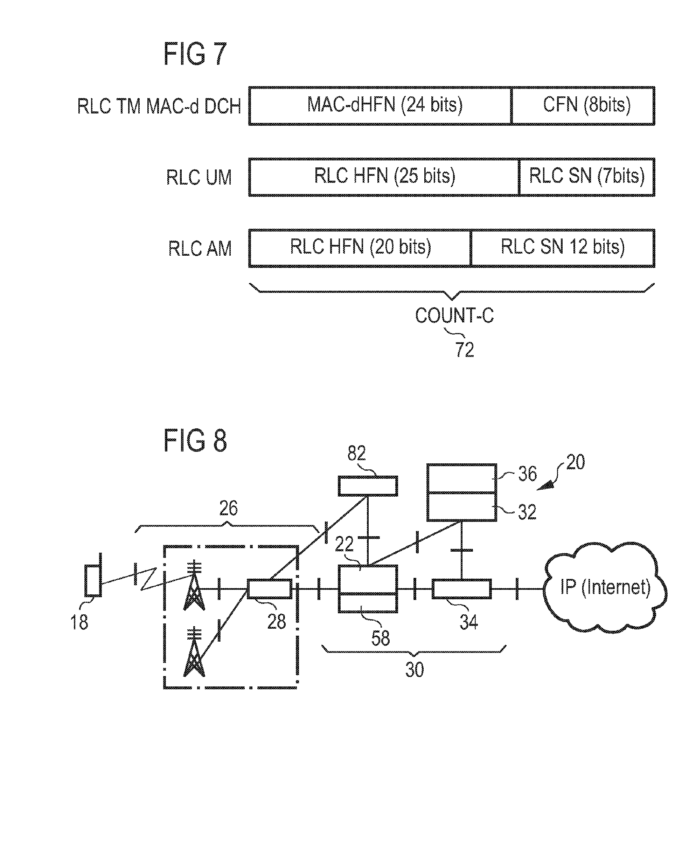

Der COUNT-C Parameter 72 hat eine konstante Länge von 32 Bit, wobei sich diese jedoch, abhängig von den drei erwähnten RLC Modes, für jeden RB 14 unterschiedlich zusammensetzten können, was in Fig. 7 dargestellt ist. Im allgemeinen setzt sich COUNT-C 72 aus einer kurzen und einer langen Sequenznummer (SQN) zusammen, wobei die kurze SQN die Bits mit der geringsten Wertigkeit (Least Significant Bit, LSB) und die lange SQN die Bits mit der höchsten Wertigkeit (Most Significant Bit, MSB) belegen. Die lange SQN ist dabei eine bereits erwähnte Hyper Frame Number (HFN), deren Länge von dem Mode, in dem die entsprechende RLC-Einheit 8 arbeitet, abhängig ist.

Bei einem Verbindungsaufbau werden die 20 MSBs der HFNs mit einem so genannten START Parameter konfiguriert und die restlichen Bits auf den Wert null gesetzt. Dieser START Parameter ist ein Maß für die Gültigkeitsdauer des aktuell benutzten Chiffrierungsschlüssels CK 46. Erreicht der START Wert einen vom Netzwerkoperator vorgegebenen Schwellwert, wird eine neue Authentifizierungsprozedur eingeleitet und somit ein neuer Chiffrierungsschlüssel ausgehandelt und etabliert, was mit einem Zurücksetzen des START Werts auf den Wert null verbunden ist. Dabei bilden zu jedem Zeitpunkt die 20 MSBs, des COUNT-C Wertes 72 mit den höchsten Wert aller COUNT-C Werte 72, den aktuellen START Wert. Bei dem Abbau einer Verbindung wird der aktuelle START Wert auf dem USIM des UE 18 gespeichert, um mit ihm bei einem erneuten Verbindungsaufbau die HFN's neu zu konfigurieren. Während einer bestehenden Verbindung werden die HFN's durch die von den kurzen SQN der entsprechenden COUNT-C Parameter 72 erzeugten Überträge hoch gezählt. D.h. wenn die kurze SQN eines COUNT-C Wertes von seinem maximal möglichen Wert auf den Wert null springt (Überlauf), erhöht sich der Wert der entsprechenden HFN des COUNT-C Wertes 72 um eins.

Dabei ist die kurze SQN, abhängig von den drei erwähnten RLC-Modes, entweder die RLC-SQN der zum RB gehörenden RLC-Einheit, die für jedes über die Luftschnittstelle zu sendende Datenpaket erhöht wird, oder die MAC-SQN, wie es in Fig. 7 zu sehen ist. Die MAC-SQN, die für jedes beginnende Übertragungsintervall, indem die Datenpakete über die Luftschnittstelle übertragen werden, erhöht wird, bezeichnet man dabei als Connection Frame Number (CFN). Es ist anzumerken, dass die RLC-SQN's und die CFN und damit auch die HFNs der COUNT-C Parameter 72 Teilnehmer spezifisch sind, weil ihr Wert von der Menge der zwischen Netzwerk und UE 18 ausgetauschten Daten abhängig ist.

Mit der oben beschriebenen im UMTS üblichen Prozedur lassen sich jedoch keine Daten, die gleichzeitig für eine bestimmte Anzahl von Mobilfunkteilnehmern bestimmt sind, wie dies beim Multicast der Fall ist, und die über einen einzigen Kanal gesendet werden sollen, mit einem Chiffrierungsschlüssel vor dem Abhören von unautorisierten Personen schützen, der den entsprechenden Teilnehmern gemeinsam bekannt ist.

Die Aufgabe der vorliegenden Erfindung ist es nun, ein Verfahren vorzusehen, mit dem sich die genannten Probleme des Standes der Technik bezüglich der Erzeugung und Verteilung von Chiffrierungsschlüsseln bezüglich der Teilnehmer einer Multicast-Gruppe umgehen lassen und das sich möglichst einfach und wirtschaftlich realisieren lässt.

Diese Aufgabe wird durch die Merkmale des unabhängigen Patentanspruches 1 gelöst, wobei zweckmäßige Ausführungsformen durch die Merkmale der Unteransprüche beschrieben sind.

Vorgesehen ist ein Verfahren zur Übermittlung von Chiffrierungsinformationen an Teilnehmer einer definierten Gruppe, welches sich dadurch auszeichnet, dass die Übertragung eines Chiffrierungsschlüssels und einer aktuellen Chiffrierungssequenznummer bzw. Teile einer solchen Sequenznummer über eine Luftschnittstelle über eine bereits gegenüber dem Abhören durch unautorisierte Personen geschützte Verbindung erfolgt. Dabei werden die Chiffrierungsinformationen zu jedem Teilnehmer einer definierten Gruppe über einen für den Teilnehmer dedizierten Kanal gesendet, der durch die teilnehmerspezifischen Chiffrierungsparameter (CK 46, COUNT-C 72,...)vor dem Abhören unautorisierter Personen geschützt ist.

Das Verfahren nach Maßgabe der vorliegenden Erfindung beinhaltet dabei vorzugsweise die Verwendung bzw. Einführung von gruppenspezifischen Chiffrierungsschlüsseln so wie von gruppenspezifischen Chiffrierungssequenznummern.

Das Verfahren nach Maßgabe der vorliegenden Erfindung kann dabei auch derart ausgestaltet sein, dass die Daten von mehreren Multicast-Gruppen zeitverschachtelt über den selben Übertragungskanal gesendet werden.

Das Verfahren kann weiterhin derart ausgestaltet sein, dass die Abfrage, ob ein Teilnehmer berechtigt ist, Nachrichten der gewünschten MCG zu empfangen, unmittelbar von dem Radio Network Controller (RNC) an das Multicast-Center gerichtet wird.

Der besondere Vorteil dieser Erfindung ist, dass sie es ermöglicht, Daten, die zu einer bestimmten Anzahl von Mobilfunkteilnehmern, insbesondere zu Teilnehmern einer Multicast-Gruppe, gesendet werden sollen, über einen gemeinsamen Übertragungskanal zu übertragen, und sie dabei vor dem Abhören durch unautorisierten Personen zu schützen. Somit können Übertragungskapazitäten gespart werden, da es nicht notwendig ist, für jeden Teilnehmer einer Gruppe einen separaten Übertragungskanal aufzubauen, insbesondere wenn die Daten von mehreren Multicast-Gruppen zeitverschachtelt über den selben Übertragungskanal gesendet werden.

Durch die Übertragung des Chiffrierungsschlüssels und einer aktuellen Chiffrierungssequenznummer über eine bereits sichere Verbindung, weist diese Erfindung den Vorteil auf, dass diese Parameter vor dem Abhören von unautorisierten Personen geschützt sind und somit nur den Teilnehmern einer Gruppe und den entsprechenden Netzwerkeinheiten, in den die Parameter benötigt oder erzeugt bzw. verwaltet werden, bekannt sind.

Des weiteren weist die Erfindung den Vorteil auf, dass es einem Mobilfunkteilnehmer, der einer definierten Gruppe, insbesondere einer Multicast-Gruppe, zugehörig ist, ermöglicht wird, gruppenspezifischen Daten zu empfangen, obwohl das Teilnehmerendgerät nicht seit Beginn der Übertragung von Daten zu der Nachrichtengruppe aktiv ist, sonder erst während einer laufenden Übertragung empfangsbereit wird.

Weitere Eigenschaften und Vorteile der Erfindung ergeben sich aus der folgenden Beschreibung einer bevorzugten Ausführungsform unter Bezugnahme auf die beigefügten Zeichnungen; darin zeigt:

Fig. 1    die UMTS Protokoll Architektur der zweiten und unteren dritten Schicht der UMTS Luftschnittstelle (Stand der Technik);

Fig. 2    die Netzwerkarchitektur einer Authetifizierungsprozedur (Stand der Technik);

Fig. 3    den Verlauf der Authentifizierungsprozedur (Stand der Technik);

Fig. 4    das Erzeugungsschema der einzelnen Parameter eines Authentification Vectors (Stand der Technik);

Fig. 5    die Berechnung eines Messaging Authentication Code (Stand der Technik);

Fig. 6    den Chiffrierungsalgorithmus der Chiffrierungsprozedur;

Fig. 7    die Zusammensetzung des Count-C Parameters (Stand der Technik);

Fig. 8    die Netzwerkarchitektur einer Authentifizierungsprozedur nach Maßgabe der Erfindung;

Fig. 9    die schematische Darstellung des Verlaufs einer möglichen Authentifizierungsprozedur nach Maßgabe der Erfindung;

Fig. 10    die schematische Darstellung des Verlaufs einer Variante der Authentifizierungsprozedur nach Maßgabe der Erfindung; und

Fig. 11    die schematische Darstellung des Verlaufs einer dritten Authentifizierungsprozedur nach Maßgabe der Erfindung.

Die Figuren 1 bis 7 wurden bereits im Zusammenhang mit der Diskussion des Standes der Technik besprochen. Ein erneutes Eingehen hieraus erübrigt sich somit.

Die hier in der Folge beschriebenen Ausführungsbeispiele setzen voraus, dass ein Mobilfunkteilnehmer zumindest in einer Multicast-Gruppe (Multicast-Group, MCG) eingeschrieben ist. D.h. im Netzwerk ist die Information vorhanden, dass der Mobilfunkteilnehmer berechtigt ist, Nachrichten zu empfangen, die nur an Teilnehmer einer bestimmten MCG gerichtet sind.

Ferner wird angenommen, dass die Nachrichten, die an eine MCG gesendet werden, über einen gemeinsamen Übertragungskanal gesendet und daher mit einem für die MCG spezifischen Chiffrierungsschlüssel (Multicast-Group Cipher Key, MCG CK) verschlüsselt werden, um sie vor dem Abhören durch unautorisierte Personen zu schützen. Der MCG CK sowie weitere Parameter, die zur Generierung eines Chiffrierungskodes (KEYSTREAM BLOCK 74) benötigt werden, werden dabei als dem UE 18 noch nicht bekannt angenommen. Des weiteren wird vorausgesetzt, dass das UE 18 des Mobilfunkteilnehmers bereits eine Verbindung zum UTRAN 26 und zum CN 30 aufgebaut hat und somit schon eine Authentifizierungsprozedur, wie sie bezüglich Fig. 3 zum Stand der Technik beschrieben ist, durchgeführt wurde. D.h. zwischen Netzwerk und UE 18 sind die für den UE 18 spezifischen Schlüssel CK 46 und IK 48 bereits ausgehandelt worden, wodurch die zwischen Netzwerk und UE 18 ausgetauschten teilnehmerspezifischen Informationen vor dem Abhören von unautorisierten Personen geschützt sind.

Den Folgenden Beschreibungen des Ablaufs der Aushandlung des MCG CK zwischen Netzwerk und UE 18 liegt eine Netzwerkarchitektur nach Fig. 8 zu Grunde.

Davon ausgehend, dass ein Mobilfunkteilnehmer Nachrichten einer bereits aktiven MCG empfangen will, benötigt das UE 18 des Teilnehmers zunächst einmal den MCG CK sowie den aktuellen COUNT-C Wert 72 des RB 14, über den die Nachrichten übertragen werden. Diese Parameter benötigt das UE 18, um den KEYSTREAM BLOCK 74, der zur Entschlüsselung der Nachricht benötigt wird, richtig berechnen zu können. Die restlichen Parameter (BEARER 66, DIRECTION 68 und LENGTH 70), die zur Berechnung des KEYSTREAM BLOCK 74 benötigt werden, kann das UE 18 anhand der für den Empfang von Multicast-Nachrichten gemachten Konfigurationen selber bestimmen. Sind dem UE 18 diese Parameter erst einmal bekannt, kann dieses die Entschlüsselung aller darauf folgenden Nachrichten erfolgreich durchführen, indem es die genannten Parameter nach jeder empfangenen Nachricht nach dem Stand der Technik aktualisiert.

Da der MCG CK ein Chiffrierungsschlüssel ist, der von mehreren Mobilfunkteilnehmern gemeinsam genutzt wird, kann dieser nicht individuell zwischen Netzwerk und UE 18 ausgehandelt werden, wie es beim Stand der Technik der Fall ist. Somit muss die Information über den momentan benutzten MCG CK dem Mobilfunkteilnehmer vom Netzwerk mitgeteilt werden, d.h. der eigentliche MCG CK muss über die Luftschnittstelle zum UE 18 übertragen werden.

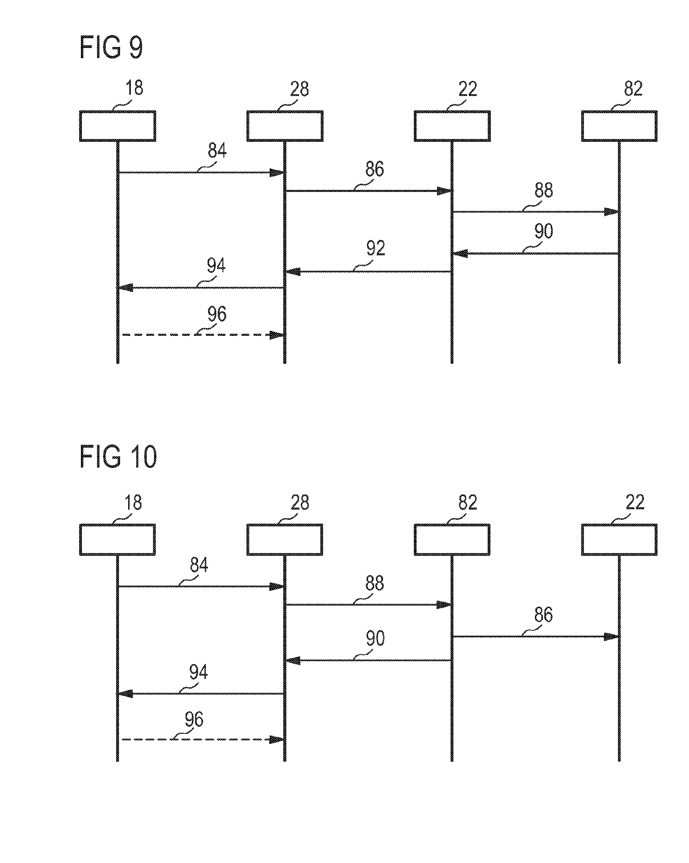

In der Fig. 8 wird eine Teilnehmer-Authentifizierung und Chiffrierungsschlüsselverwaltung durch das Multicast-Center beschrieben. Dabei wird vorausgesetzt, dass das Multicast Center (MCC) 82, das für die Erzeugung und Verteilung von MC-Nachrichten verantwortlich ist, die Fähigkeit zur Teilnehmer-Authentifizierung und die Funktion zur Generierung des MCG CK beinhaltet. Somit ist im MCC 80 die Information vorhanden, welcher MCG CK einer MCG zu einem bestimmten Zeitpunkt gültig ist. Damit das UE 18 den MCG CK vom Netzwerk übermittelt bekommt, sendet es als erstes eine Anfrage zum Eintritt in eine MCG (MCG Entry request) 84 zum RNC 28, wie in Fig. 9 dargestellt. In dieser Anfrage ist die Identität des Mobilfunkteilnehmers (User ID) sowie die Identität der MCG (MCG ID), der der Mobilfunkteilnehmer beitreten möchte, enthalten.

Empfängt der RNC 28 eine Nachricht des Typs MCG Entry request 84, signalisiert dieser dem SGSN, dass ein Mobilfunkteilnehmer im Versorgungsbereich des RNC 28 einer MCG beitreten möchte. Dazu sendet der RNC 28 eine Nachricht des Typs MCG Entry indication 86 an den SGSN 22, die wiederum die Parameter User ID und MCG ID enthält. Nach dem der SGSN 22 eine solche Nachricht empfangen hat, fragt er beim MCC 82 an, ob der entsprechende Teilnehmer berechtigt ist, der gewünschten MCG beizutreten. Dies erreicht der SGSN 22 durch das Senden einer Anfrage nach Authentifizierung für eine MCG (MCG Authentication request 88) an das MCC 82, in der auch wiederum die Identität des Mobilfunkteilnehmers und die Identität der MCG enthalten sind. Empfängt das MCC 82 ein MCG Authentication request, prüft es anhand der Identität des Mobilfunkteilnehmers, ob dieser berechtigt ist, der gewünschten MCG beizutreten. Ist dies der Fall, ermittelt das MCC 82 den derzeit gültigen MCG CK der gewünschten MCG und sendet diesen zusammen mit den Parametern User ID und MCG ID in einer MCG Authentication response Nachricht 90 zum SGSN 22. Der SGSN 22 kann daraufhin die nötigen Konfigurationen vornehmen, die es den Netzwerkoperator ermöglichen, die für den Mobilfunkteilnehmer durch die Inanspruchnahme des MC-Service anfallenden Gebühren zu ermitteln. Ferner leitet der SGSN 22 die vom MCC 82 empfangenen Informationen in einer MCG Entry aware Nachricht 92 an den entsprechenden RNC 28 weiter. Nach dem der RNC 28 den MCG CK vom SGSN 22 empfangen hat, ermittelt dieser den aktuellen MCG spezifischen COUNT-C Wert (MCG COUNT-C) 72, der für die Berechnung des nächsten KEYSTREAM BLOCK 74 benutzt wird. Hat der RNC 28 dabei bereits einen anderen Teilnehmer der MCG mit MC-Nachrichten versorgt, ist die Information über den MCG COUNT-C Wert 72 in der entsprechenden Protokolleinheit vorhanden, die die Verschlüsselung der MCG Daten durchführt. Sind innerhalb des Versorgungsbereichs des RNC 28 noch keine weiteren Teilnehmer der MCG aktiv, muss der RNC 28 zunächst die entsprechenden Konfigurationen vornehmen, die zum Aufbau einer MCG Verbindung notwendig sind. Dabei muss der RNC 28 unter anderem den Startwert für den MCG COUNT-C Parameter 72 in irgendeiner Weise festlegen.

Die Verschlüsselung der MCG Daten kann dabei entweder im RLC 8 oder im MAC 10 der zweiten Schicht durchgeführt werden. Abhängig davon, wo die Verschlüsselung der MCG Daten statt findet, kann sich dabei der MCG COUNT-C Wert abweichend von dem Stand der Technik zusammensetzen. Findet die Verschlüsselung der Daten im RLC 8 statt besteht der MCG COUNT-C Wert 72 zwar auch wie beim Stand der Technik aus der RLC HFN und der RLC SQN, jedoch muss die RLC HFN beim erstmaligen senden einer MCG Nachricht nicht mit einem UE 18 spezifischen START- Wert konfiguriert, sonder kann auch mit einer Zufallszahl oder mit einem vordefinierten Wert konfiguriert werden. Findet die Verschlüsselung der MCG Daten im MAC 10 der zweiten Schicht statt, so besteht der MCG COUNT-C Wert 72 ausschließlich aus einer 32 Bit langen Zahl, die beim senden der ersten Nachricht für eine MCG entweder mit einer Zufallszahl oder einem vordefinierten Wert konfiguriert wird.

Den so ermittelten MCG COUNT-C Wert 72 sowie den MCG CK sendet der RNC 28 daraufhin in einer MCG Connection setup Nachricht 94 über einen dedizierten und vor dem Abhören durch unautorisierte Personen geschützten Kanal an das UE 18. In dem Fall, dass die Chiffrierung der Daten im RLC 8 statt findet, braucht dabei nur die RLC-HFN des MCG COUNT-C zum UE 18 übertragen werden, weil die RLC-SQN der Datenpakete im allgemeinen nicht verschlüsselt wird, und daher vom UE 18 ermittelt werden kann. Diese Nachricht wird dabei mit dem zwischen Netzwerk und UE 18 bereits ausgehandelten UE 18 spezifischen Chiffrierungsschlüssel CK 46 verschlüsselt. Somit können der MCG CK und der COUNT-C Wert der MCG nicht von unautorisierten Personen in Erfahrung gebracht werden.

Das UE 18 etabliert den MCG CK und den COUNT-C Wert, nach dem er diese vom RNC 28 empfangen hat, und kann daraufhin alle MC-Nachrichten der MCG auf einem gemeinsamen Kanal empfangen. Dabei ist es auch denkbar, dass das UE 18 den empfangenen MCG CK auf dem USIM speichert, um ihn wieder benutzten zu können, wenn eine neue Übertragung von MCG Nachrichten stattfindet.

Um dem Netzwerk zu signalisieren, ob die Prozedur zur Authentifizierung und zur Übermittlung des MCG CK sowie des MCG COUNT-C Wertes erfolgreich durchgeführt wurde, kann das UE 18 als letztes eine MCG Connection complete Nachricht 96 an das Netzwerk senden. In dieser kann unter anderem z.B. der Grund für einen nicht erfolgreichen Ablauf der beschriebenen Prozedur enthalten sein.

In Fig. 10 ist eine Variante der Teilnehmer-Authentifizierung wie mit Bezug auf Fig. 9 beschrieben, dargestellt. Hier wird wiederum vorausgesetzt, dass das MCC 82 die Funktionen zur Authentifizierung von Teilnehmern einer MCG und zur Generierung von MCG CK beinhaltet.

Das UE 18 signalisiert auch hier den Wunsch in eine MCG einzutreten, indem es eine MCG Entry request Nachricht 84 an den RNC 28 sendet. Dieser fragt jedoch anders als bei der vorhergehenden Variante, direkt beim MCC 82 nach, ob der Teilnehmer berechtigt ist, Nachrichten der gewünschten MCG zu empfangen. Dies erreicht der RNC 28 durch das Senden einer MCG Authentication request Nachricht 88 an das MCC 82. Das MCC 82 prüft nach dem Empfang einer MCG Authentifizierungsanfrage anhand der in der Nachricht enthalten Identität des Mobilfunkteilnehmers und der Identität der MCG, ob er berechtigt ist der MCG beizutreten. Ist die Berechtigung vorhanden ermittelt das MCC 82 den derzeit aktuellen MCG CK und sendet diesen zusammen mit der Identität des Mobilfunkteilnehmers und der Identität der MCG in einer MCG Authentication response Nachricht 90 an den RNC 28. Zusätzlich signalisiert das MCC 82 dem SGSN 22 durch eine MCG Entry indication Nachricht 86, dass der Teilnehmer der entsprechenden MCG beigetreten ist. Somit kann der SGSN 22 wiederum die zur Ermittlung der für den Teilnehmer anfallenden Gebühren notwendigen Konfigurationen vornehmen.

Nach dem der RNC 28 den MCG CK vom MCC 82 empfangen hat, ermittelt dieser, wie schon im ersten Ausführungsbeispiel beschrieben, den aktuellen MCG COUNT-C Wert. Anschließend sendet der RNC 28 den MCG CK und den MCG COUNT-C Wert, bzw. nur einen Teil des MCG COUNT-C Wertes, über eine mit dem UE 18 spezifischen CK 46 vor dem Abhören durch unautorisierte Personen geschützte dedizierte Verbindung zum UE 18. Das UE 18 etabliert nach dem Empfang der Nachricht die für das Entschlüsseln von MC-Nachrichten benötigten Parameter und ist damit fähig alle folgenden auf einen gemeinsamen Kanal empfangenen Nachrichten der MCG zu entschlüsseln.

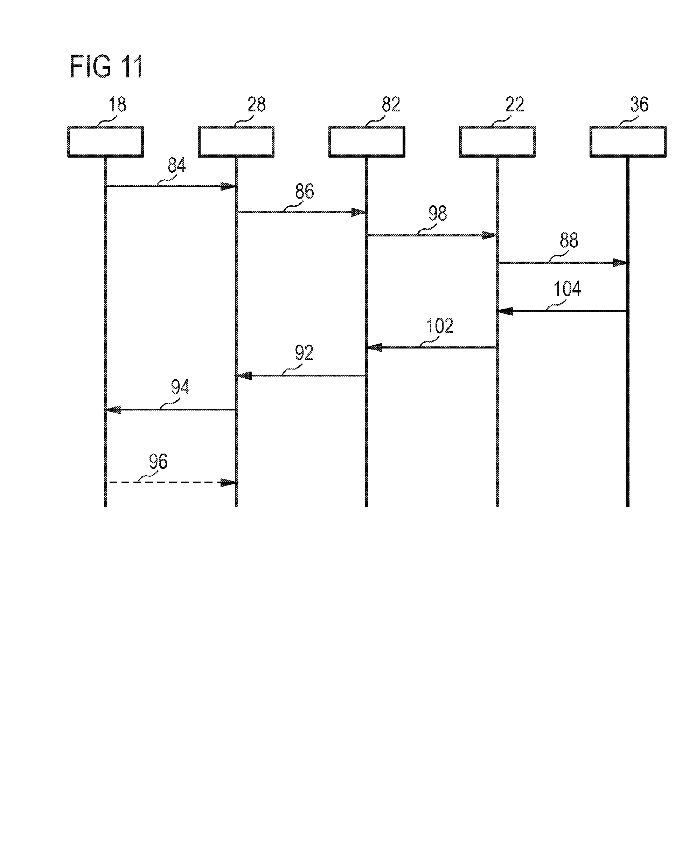

Die Fig. 11 schließlich zeigt eine Teilnehmer-Authentifizierung im Authentication Center (AuC) 36 sowie eine Chiffrierungsschlüsselverwaltung durch den SGSN 22. Es sei vorausgesetzt, dass die Funktionen zur Teilnehmer Authentifizierung und zur Erzeugung von MCG CK's, wie beim Stand der Technik, im AuC 36 vorhanden sind, und die Information welcher MCG CK z.Z. gültig ist, im SGSN 22 vorgehalten wird.

Das UE sendet als erstes wieder eine MCG Entry request Nachricht 84 zum RNC 28. Dieser signalisiert nach dem Empfang einer solchen Nachricht dem MCC 82, das ein Teilnehmer in seinem Versorgungsbereich einer bestimmten MCG beitreten will. Dazu sendet der RNC 28 eine MCG Entry indication Nachricht 86 an das MCC 82, in der die Identität des Mobilfunkteilnehmers und die Identität der MCG enthalten sind. Diese beiden Parameter hat der RNC 28 dabei durch die Anfrage des UE 18 erhalten. Um den derzeit gültigen MCG CK zu ermitteln, sendet daraufhin das MCC 82 eine Anfrage nach dem MCG CK (MCG CK request) 98 an das SGSN 22, die wiederum die Parameter User ID und MCG ID enthält. Der SGSN 22 fragt daraufhin zunächst mit einer MCG Authentication request Nachricht 88 beim AuC 36 an, ob der Teilnehmer überhaupt dazu berechtigt ist Nachrichten der entsprechenden MCG zu empfangen. Empfängt das AuC 36 eine MCG Authentification request Nachricht 88, prüft es anhand der in der Nachricht enthaltenen Identitäten des Teilnehmers und der MCG, ob der Teilnehmer berechtigt ist, Nachrichten der entsprechenden MCG zu empfangen. Liegt solch eine Berechtigung für den Teilnehmer vor, bestätigt das AuC 36 dies dem SGSN 22 durch eine MCG Authentication acknowledge Nachricht 104. Der SGSN 22 kann nun wiederum die nötigen Konfigurationen vornehmen, die dem Netzwerkoperator die Gebührenermittlung bzgl. des in Anspruch genommenen MC-Service ermöglichen. Des weiteren bestimmt der SGSN 22 den z.Z. gültigen MCG CK und sendet diesen mit Hilfe einer MCG CK response Nachricht 102 zum RNC 28. Der RNC 28 ermittelt daraufhin, wie schon im ersten Ausführungsbeispiel beschrieben, den aktuellen Wert des MCG COUNT-C Parameters. Diesen bzw. nur die RLC-HFN des MCG COUNT-C Wertes sendet er dann zusammen mit dem MKG CK über einen vor dem Abhören von unautorisierten Personen geschützten, dedizierten Übertragungskanal zum UE 18. Das UE 18 reagiert sodann auf den Empfang dieser Nachricht wie im ersten Ausführungsbeispielbezüglich Fig. 9 bereits beschrieben.

**Patentansprüche**

1.  Verfahren zur Übermittlung von Chiffrierungsinformationen an Teilnehmer einer Multicast- Gruppe in einem Mobilfunknetzwerk,
    **dadurch gekennzeichnet,**
    **dass** die Übertragung eines Chiffrierungsschlüssels und einer aktuellen Chiffrierungssequenznummer bzw. Teile einer solchen Sequenznummer über eine Luftschnittstelle, über eine bereits gegenüber dem Abhören durch unautorisierte Personen geschützte Verbindungen, welche den Empfänger der Chiffrierungsinformationen dediziert zugeordnet sind.

2.  Verfahren nach Anspruch 1,
    **dadurch gekennzeichnet,**
    **dass** bei der Übertragung gruppenspezifische Chiffrierungsschlüssel sowie gruppenspezifische Chiffrierungssequenznummern Verwendung finden.

3.  Verfahren nach Anspruch 1 oder 2,
    **dadurch gekennzeichnet,**
    **dass** die Multicast-Daten von mehreren Multicast-Gruppen zeitverschachtelt über den selben Übertragungskanal gesendet werden.

4.  Verfahren nach einem der vorhergehenden Ansprüche,
    **dadurch gekennzeichnet,**
    **dass** die Teilnehmer-Authentifizierung durch ein Netzwerkelement, insbesondere einem Multicast-Center (82), erfolgt, welches unter anderem für die Verwaltung und Kontrolle von spezifischen Informationen eines Teilnehmers einer Multicast-Gruppe verantwortlich ist.

5.  Verfahren nach einem der vorhergehenden Ansprüche,
    **dadurch gekennzeichnet,**
    **dass** die Chiffrierschlüsselverwaltung durch ein Netzwerkelement, insbesondere einem Multicast-Center (82), erfolgt, welches unter anderem für die Verwaltung und Kontrolle von spezifischen Informationen eines Teilnehmers einer Multicast-Gruppe verantwortlich ist.

6.  Verfahren nach einem der Ansprüche 1 bis 3,
    **dadurch gekennzeichnet,**
    **dass** die Teilnehmer-Authentifizierung im Authentication-Center (36) des Mobilfunknetzes erfolgt.

7.  Verfahren nach einem der Ansprüche 1 bis 3 und 6,
    **dadurch gekennzeichnet,**
    **dass** die Chiffrierschlüsselverwaltung im Serving GPRS Node (22) des Mobilfunknetzes erfolgt.

8.  Verfahren nach einem der vorhergehenden Ansprüche,
    **dadurch gekennzeichnet,**

**dass** die Übertragung des gruppenspezifischen Chiffrierungsschlüssels sowie der gruppenspezifischen Chiffrierungssequenznummer durch eine von dem der Multicast-Gruppe beitretenden Teilnehmer (18) ausgehenden Anfrage ausgelöst wird.

9. Verfahren nach einem der Ansprüche 1 bis 7,
**dadurch gekennzeichnet,**
**dass** die Übertragung des gruppenspezifischen Chiffrierungsschlüssels sowie der gruppenspezifischen Chiffrierungssequenznummer durch ein Netzwerkelement initiiert wird, welches unter anderem für die Verwaltung und Kontrolle von spezifischen Informationen eines Teilnehmers einer Multicast-Gruppe verantwortlich ist.

FIG 1

FIG 2

IP (Internet)

FIG 3

FIG 4

FIG 5

FIG 6

## FIG 7

| RLC TM MAC-d DCH | MAC-dHFN (24 bits) | CFN (8bits) |
|---|---|---|

| RLC UM | RLC HFN (25 bits) | RLC SN (7bits) |
|---|---|---|

| RLC AM | RLC HFN (20 bits) | RLC SN 12 bits) |
|---|---|---|

COUNT-C

72

## FIG 8

FIG 9

18    28    22    82

84

86

88

90

92

94

96

FIG 10

18    28    82    22

84

88

86

90

94

96

FIG 11